# EUROPEAN PATENT SPECIFICATION

(11) **EP 3 702 215 B1**
(45) Date of publication and mention of the grant of the patent: **11.01.2023**
(21) Application number: 19160148.3
(22) Date of filing: 28.02.2019
(51) Int. Cl.: B60Q 1/50, B60Q 9/00

(54) **METHOD FOR CORRECTING A LIGHT PATTERN AND AUTOMOTIVE LIGHTING DEVICE**
VERFAHREN ZUR KORREKTUR EINES LICHTMUSTERS UND FAHRZEUGBELEUCHTUNGSVORRICHTUNG
PROCÉDÉ DE CORRECTION D'UN MOTIF LUMINEUX ET DISPOSITIF D'ÉCLAIRAGE AUTOMOBILE

(43) Date of publication of application: 02.09.2020
(73) Proprietor: Valeo Vision, 93012 Bobigny Cedex (FR)
(72) Inventor: PRAT, Constantin, 93012 BOBIGNY Cedex (FR)
(74) Representative: Valeo Visibility

(56) References cited:
- EP-A1- 3 118 515
- EP-A1- 3 428 511
- EP-A2- 3 401 161
- DE-A1-102012 003 158

## Description

### TECHNICAL FIELD

This invention is related to the field of automotive lighting devices, and more particularly, to the way light patterns are managed.

### STATE OF THE ART

Digital lighting devices are being increasingly adopted by car makers for middle and high market products.

Adaptive functions in lighting devices are usually focused on anti-glaring provisions. This is the main concern, since glaring is a very crucial point when providing a good quality high beam functionality.

However, there are some other possibilities to improve the drivers' experience, by adapting the light pattern to the current conditions of the vehicle.

EP3118515 A1 discloses a vehicle lamp which includes a laser light for depicting warning marks in front of a vehicle. A lighting tool ECU provided in the vehicle lamp calculates a current speed of the host vehicle. The warning marks are controlled to move relative to the vehicle based on the speed of the vehicle. The vehicle lamp causes the mark depicted on the road to move faster or slower than the speed of host vehicle in reverse or forward direction to give to the driver a perception of higher or lower vehicle speed.

### SUMMARY OF THE INVENTION

The invention provides an alternative solution for improving the driver's visual experience by a method for correcting a light pattern according to claim 1 and an automotive lighting device according to claim 6. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for correcting a first light pattern provided by an automotive lighting device, when the automotive lighting device is mounted on an vehicle, the first light pattern having a plurality of lane lines driven on the road, the method comprising the steps of sensing a lighting device speed, and projecting a corrected light pattern where the position of the corrected lane lines is different from the position of the lane lines in the first light pattern, and the difference depends on the lighting device speed, wherein the position of the corrected lane lines in the corrected light pattern is translated towards the automotive lighting device at the same speed as the lighting device speed.

Since the automotive lighting device is usually mounted on an automotive vehicle, the lighting device speed is the same as the vehicle speed, which is sensed easily. The projection of a corrected light pattern which depends on the speed provides a better visual experience for the driver, since they perceive the real lane lines running towards them.

Synchronizing the lighting device speed with the projection speed optimizes the driver's visual experience.

In some particular embodiments, the step of projecting a corrected light pattern is carried out with a predetermined frequency.

A predetermined frequency helps in the calculation of the corrected light pattern.

In some particular embodiments, the predetermined frequency is greater than 40 Hz, and particularly greater than 50 Hz.

A higher frequency is advantageous for the visual experience. If the vehicle drives at 35 m/s (which is, more or less, the maximum speed of a highway), it runs 0,8 m every 25 ms (which corresponds to 40 Hz). A higher refresh rate could be insufficient to provide a good visual experience for the driver.

In some particular embodiments, the corrected light pattern is projected between a start distance and an end distance.

The projection must be limited within a projection zone. A useful way of delimiting such a zone is between two distances, a start distance where the projection "starts", and is close to the lighting device, and an end distance, where the projection "finishes", and is far from the lighting device.

In some particular embodiments, before projecting the corrected light pattern, the method further comprises the steps of
a) defining a line length and a line spacing;
b) defining a distance between lines variable, which is the sum of the line length and the line spacing;
c) sensing the time since the last corrected light pattern was projected;
d) defining a translation variable which represents the distance run by the lighting device since the last corrected light pattern was projected;
e) correcting, if necessary, the translation variable until it is lower than the distance between lines by subtracting a multiple of the distance between lines;
f) defining a first distance as the difference between the start distance and the translation variable;
g) defining a second distance as the sum of the first distance and the line length; and wherein the step of projecting the corrected light pattern comprises the steps of
h) drawing a line from a first point, which is the maximum between the first distance and the start distance, to a second point, which is the minimum between the second distance and the end distance;
i) increasing the value of the first distance by summing the distance between lines variable and increasing the value of the second distance by summing the distance between lines variable; and
j) repeating steps h) and i) until the first distance is equal or greater than the end distance.

This algorithm ensures a correct projection of the corrected light pattern.

In a second inventive aspect, the invention provides an automotive lighting device comprising
a matrix arrangement of solid-state light sources, intended to provide a light pattern;
control means for accomplishing the steps of the method according to the first inventive aspect.

This lighting device provides the advantageous functionality of adapting the shape and focus of the light pattern depending on the vehicle speed.

In some particular embodiments, the matrix arrangement comprises at least 5000 solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for this method. The rows represent projecting distances and columns represent an angle interval. These distances and angles values depend on the resolution of the matrix arrangement. As a consequence, lane lines may be projected with a resolution enough to be perceived as running at the same speed as the vehicle.

### BRIEF LIST OF DRAWINGS AND REFERENCE NUMBERS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The scope of protection is restricted only by the appended claims.

The drawings comprise the following figures:
Figure 1 shows a general perspective view of an automotive lighting device according to the invention.
Figures 2a to 2e show the evolution of the projection of a light pattern before a method according to the invention takes place.
Figure 3 shows an algorithm which is used in some embodiments of the invention.

### DETAILED DESCRIPTION OF THE INVENTION

The example embodiments are described in sufficient detail to enable those of ordinary skill in the art to embody and implement the systems and processes herein described.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

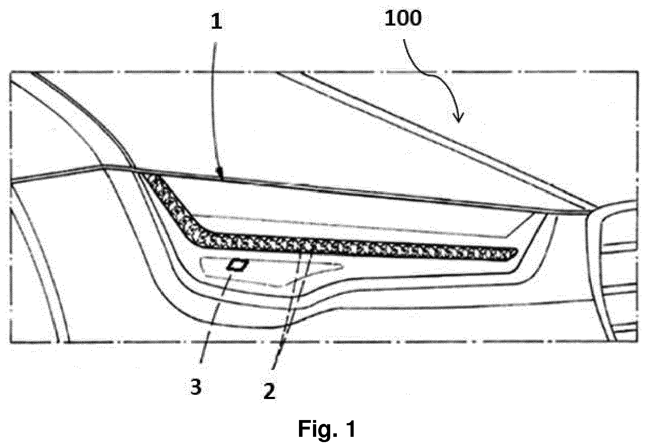

Figure 1 shows a general perspective view of an automotive lighting device according to the invention.

This lighting device 1 is installed in an automotive vehicle 100 and comprises
a matrix arrangement of LEDs 2, intended to provide a light pattern;
control means 3 for controlling the intensity of each LED, to perform lighting functions and, particularly, to correct the light pattern depending on the vehicle speed.

This matrix configuration is a high-resolution module, having a resolution greater than 5000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixilated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

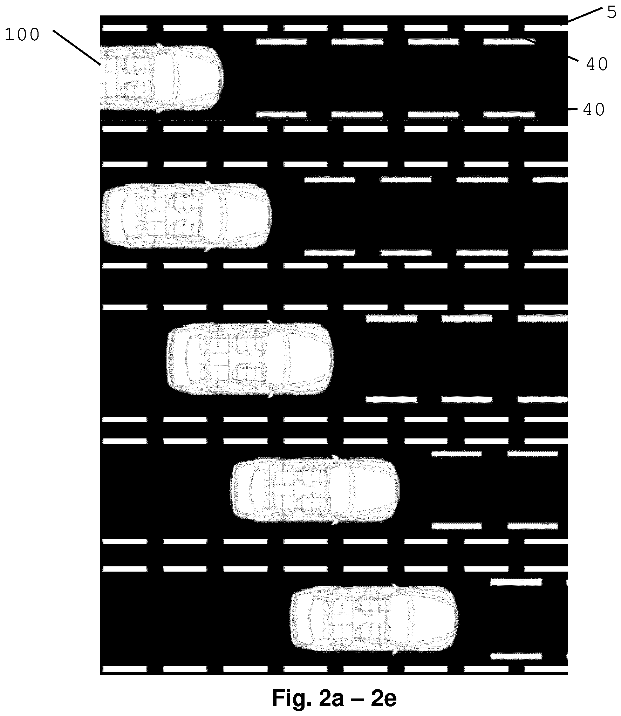

Figures 2a to 2e show the evolution of this projection before a method according to the invention takes place. Projected lane lines 40 are moving with the vehicle 100 because they are static with respect of the vehicle, and this may cause visual discomfort in the driver if compared with road real lane lines 5.

When a method according to the invention is used, projected corrected lane lines are moving with respect of the vehicle 100 towards the vehicle 100 at the same speed as the vehicle speed, and this causes the effect of being static on the road, the same as the real lane lines 5.

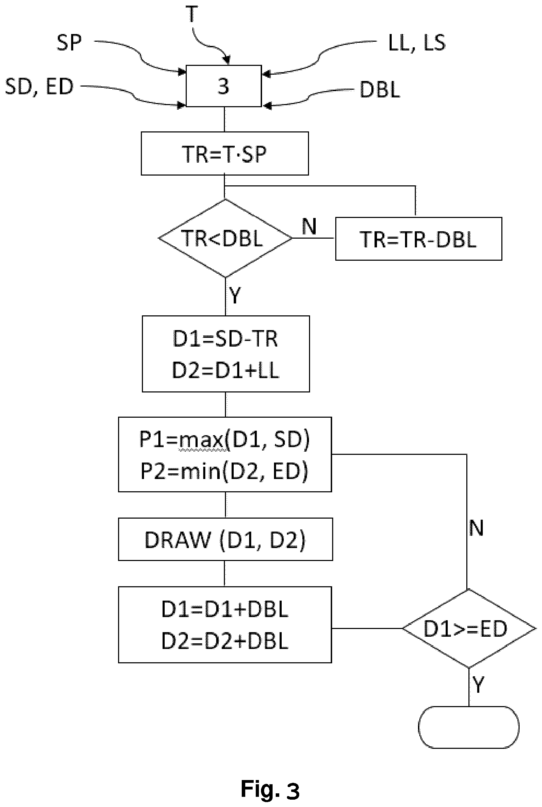

To carry out this method, an algorithm such as the one shown in figure 3 is used in some embodiments of the invention.

First, the control means 3 is fed with some input values, which in this case will be the following
the lighting device speed SP: since the lighting device is mounted on an automotive vehicle, the lighting device speed will correspond with the vehicle speed, which is measured easily;
a start distance SD and an end distance ED: these distances represent the closest and farthest boundaries of the projection;
a line length LL and a line spacing LS: these variables may be chosen by the car manufacturer, since they may adapt to different countries, where the lane lines may have different length, and the spacing between them may also vary;
a distance between lines variable DBL, which is the sum of the line length and the line spacing;
the time T since the last corrected light pattern was projected: this time may be given by the refresh rate, which may depend on the lighting device speed or may be fixed, depending on the car manufacturer's decision.

With these inputs, a translation variable TR is defined. This translation variable tries to represent the distance that the vehicle has run since the last time that a corrected light pattern was projected. Accordingly, this transition variable is firstly defined as the product of the vehicle speed by the time since the last corrected light pattern was projected.

This translation variable is corrected, if necessary, by subtracting a multiple of the distance between lines, until the final value of the translation variable is an amount lower than the distance between lines. This is done because the projection of lines is cyclical, and the interest about the translation variable resides on measuring the distance between the start distance and the first lane line.

After that, a first distance D1 and a second distance D2 are defined. The first distance D1 is the difference between the start distance SD and the translation variable TR. It represents where the first line should start to be drawn. The second distance D2 is the sum of the first distance D1 and the line length LL. It represents where the first line should finish.

Then, a cyclical process of drawing lines is carried out: a line is drawn from the first point P1 to the second point P2. The first point P1 is the maximum between the first distance D1 and the start distance SD, and the second point P2 is the minimum between the second distance D2 and the end distance ED. This is thus defined because there is no drawing closer than the start distance and there is no drawing beyond the end distance. After the drawing of the first line, the variables of first distance D1 and second distance D2 are shifted by the value of the distance between lines variable and the cyclical process continues until the first distance is equal or greater than the end distance.

As a consequence, projected lines according to this corrected light pattern intend to be "fixed on the road", since the speed of travelling of the projection with respect of the lighting device is the same and opposite to the speed of the vehicle with respect of the road where the lines are projected.

## Claims

1. Method for correcting a first light pattern provided by an automotive lighting device (1), when the automotive lighting device (1) is mounted on an vehicle (100), the first light pattern having a plurality of lane lines (40) driven on the road, the method comprising the steps of sensing a lighting device speed (SP), and
projecting a corrected light pattern where the position of the corrected lane lines is different from the position of the lane lines (40) in the first light pattern, and the difference depends on the lighting device speed (SP); and
wherein the position of the corrected lane lines in the corrected light pattern is translated towards the automotive lighting device (1) at the same speed as the lighting device speed (SP).

2. Method according to claim 1, wherein the step of projecting a corrected light pattern is carried out with a predetermined frequency.

3. Method according to claim 2, wherein the predetermined frequency is lower than 100 Hz, and particularly equal or lower than 50 Hz.

4. Method according to any of the preceding claims, wherein the corrected light pattern is projected between a start distance (SD) and an end distance (ED).

5. Method according to claim 4 when it depends on claims 2 or 3, wherein, before projecting the corrected light pattern, the method further comprises the steps of
a) defining a line length (LL) and a line spacing (LS);
b) defining a distance between lines variable (DBL), which is the sum of the line length (LL) and the line spacing (LS);
c) sensing the time (T) since the last corrected light pattern was projected;
d) defining a translation variable (TR) which represents the distance run by the automotive lighting device (1) since the last corrected light pattern was projected;
e) correcting, if necessary, the translation variable (TR) until it is lower than the distance between lines (DBL) by subtracting a multiple of the distance between lines;
f) defining a first distance (D1) as the difference between the start distance (SD) and the translation variable (TR);
g) defining a second distance (D2) as the sum of the first distance (D1) and the line length (LL);
and wherein the step of projecting the corrected light pattern comprises the steps of
h) drawing a line from a first point (P1), which is the maximum between the first distance (D1) and the start distance (SD), to a second point (P2), which is the minimum between the second distance (D2) and the end distance (ED);
i) increasing the value of the first distance (D1) by summing the distance between lines variable (DBL) and increasing the value of the second distance by summing the distance between lines variable (DBL); and
j) repeating steps h) and i) until the first distance (D1) is equal or greater than the end distance (ED).

6. Automotive lighting device (1) comprising
a matrix arrangement of solid-state light sources (2), intended to provide a light pattern; control means (3) for accomplishing the steps of the method according to any of the preceding claims.

7. Automotive lighting device (1) according to claim 6, wherein the matrix arrangement comprises at least 5000 solid-state light sources (2).

## Patentansprüche

1. Verfahren zum Korrigieren eines ersten Lichtmusters, das durch eine Automobilbeleuchtungsvorrichtung (1) bereitgestellt wird, wenn die Automobilbeleuchtungsvorrichtung (1) an einem Fahrzeug (100) montiert ist, wobei das erste Lichtmuster mehrere Fahrspurlinien (40) aufweist, die auf der Straße befahren werden, wobei das Verfahren die folgenden Schritte umfasst:
Erfassen einer Beleuchtungsvorrichtungsgeschwindigkeit (SP), und
Projizieren eines korrigierten Lichtmusters, bei dem sich die Position der korrigierten Fahrspurlinien von der Position der Fahrspurlinien (40) in dem ersten Lichtmuster unterscheidet und der Unterscheid von der Beleuchtungsvorrichtungsgeschwindigkeit (SP) abhängt; und
wobei die Position der korrigierten Fahrspurlinien in dem korrigierten Lichtmuster zu der Automobilbeleuchtungsvorrichtung (1) hin mit der gleichen Geschwindigkeit wie die Beleuchtungsvorrichtungsgeschwindigkeit (SP) verschoben wird.

2. Verfahren nach Anspruch 1, wobei der Schritt des Projizierens eines Lichtmusters mit einer vorbestimmten Frequenz ausgeführt wird.

3. Verfahren nach Anspruch 2, wobei die vorbestimmte Frequenz kleiner als 100 Hz und insbesondere gleich oder kleiner als 50 Hz ist.

4. Verfahren nach einem der vorhergehenden Ansprüche, wobei das korrigierte Lichtmuster zwischen einer Startentfernung (SD) und einer Entfernung (ED) projiziert wird.

5. Verfahren nach Anspruch 4, wenn abhängig von Ansprüchen 2 oder 3, wobei das Verfahren vor dem Projizieren des korrigierten Lichtmusters ferner die folgenden Schritte umfasst:
a) Definieren einer Linienlänge (LL) und eines Linienabstands (LS);
b) Definieren einer Entfernung-zwischen-Linien-Variable (DBL), die die Summe der Linienlänge (LL) und des Linienabstands (LS) ist;
c) Erfassen der Zeit (T), seit das letzte korrigierte Lichtmuster projiziert wurde;
d) Definieren einer Translationsvariable (TR), die die Entfernung repräsentiert, die durch die Automobilbeleuchtungsvorrichtung (1) zurückgelegt wurde, seit das letzte korrigierte Lichtmuster projiziert wurde;
e) Korrigieren, falls erforderlich, der Translationsvariable (TR), bis sie niedriger als die Entfernung zwischen Linien (DBL) ist, indem ein Vielfaches der Entfernung zwischen Linien subtrahiert wird;
f) Definieren einer ersten Entfernung (D1) als die Differenz zwischen der Startentfernung (SD) und der Translationsvariable (TR);
g) Definieren einer zweiten Entfernung (D2) als die Summe der ersten Entfernung (D1) und der Linienlänge (LL); und wobei der Schritt des Projizierens des korrigierten Lichtmusters die folgenden Schritte umfasst:
h) Ziehen einer Linie von einem ersten Punkt (P1), der das Maximum zwischen der ersten Entfernung (D1) und der Startentfernung (SD) ist, zu einem zweiten Punkt (P2), der das Minimum zwischen der zweiten Entfernung (D2) und der Endentfernung (ED) ist;
i) Erhöhen des Wertes der ersten Entfernung (D1) durch Summieren der Entfernung-zwischen-Linien-Variable (DBL) und Erhöhen des Wertes der zweiten Entfernung durch Summieren der Entfernung-zwischen-Linien-Variable (DBL); und
j) Wiederholen von Schritten h) und i), bis die erste Entfernung (D1) gleich oder größer als die Endentfernung (ED) ist.

6. Automobilbeleuchtungsvorrichtung (1), die Folgendes umfasst:
eine Matrixanordnung aus Festkörperlichtquellen (2), die zum Bereitstellen eines Lichtmusters vorgesehen sind;
ein Steuermittel (3) zum Bewirken der Schritte des Verfahrens nach einem der vorhergehenden Ansprüche.

7. Automobilbeleuchtungsvorrichtung (1) nach Anspruch 6, wobei die Matrixanordnung wenigstens 5000 Festkörperlichtquellen (2) umfasst.

## Revendications

1. Procédé servant à corriger un premier motif lumineux fourni par un dispositif d'éclairage automobile (1), le dispositif d'éclairage automobile (1) étant monté sur un véhicule (100), le premier motif lumineux ayant une pluralité de lignes de couloir (40) dirigées sur la route, le procédé comprenant les étapes de
détection d'une vitesse de dispositif d'éclairage (SP), et
projection d'un motif lumineux corrigé où la position des lignes de couloir corrigées est différente de la position des lignes de couloir (40) dans le premier motif lumineux, et la différence dépend de la vitesse de dispositif d'éclairage (SP) ; et
dans lequel la position des lignes de couloir corrigées dans le motif lumineux corrigé est translatée vers le dispositif d'éclairage automobile (1) à la même vitesse que la vitesse de dispositif d'éclairage (SP).

2. Procédé selon la revendication 1, dans lequel l'étape de projection d'un motif lumineux corrigé est réalisée avec une fréquence prédéterminée.

3. Procédé selon la revendication 2, dans lequel la fréquence prédéterminée est inférieure à 100 Hz, et en particulier égale ou inférieure à 50 Hz.

4. Procédé selon l'une quelconque des revendications précédentes, dans lequel le motif lumineux corrigé est projeté entre une distance de début (SD) et une distance de fin (ED).

5. Procédé selon la revendication 4 lorsqu'elle dépend de la revendication 2 ou 3, le procédé comprenant en outre, avant la projection du motif lumineux corrigé, les étapes de
a) définition d'une longueur de ligne (LL) et d'un espacement entre lignes (LS) ;
b) définition d'une variable distance entre lignes (DBL), qui est la somme de la longueur de ligne (LL) et de l'espacement entre lignes (LS) ;
c) détection du temps (T) depuis que le dernier motif lumineux corrigé a été projeté ;
d) définition d'une variable translation (TR) qui représente la distance parcourue par le dispositif d'éclairage automobile (1) depuis que le dernier motif lumineux corrigé a été projeté ;
e) correction, si nécessaire, de la variable translation (TR) jusqu'à ce qu'elle soit inférieure à la distance entre lignes (DBL) par soustraction d'un multiple de la distance entre lignes ;
f) définition d'une première distance (D1) comme la différence entre la distance de début (SD) et la variable translation (TR) ;
g) définition d'une deuxième distance (D2) comme la somme de la première distance (D1) et de la longueur de ligne (LL) ;
et dans lequel l'étape de projection du motif lumineux corrigé comprend les étapes de
h) traçage d'une ligne depuis un premier point (P1), qui est le maximum entre la première distance (D1) et la distance de début (SD), jusqu'à un deuxième point (P2), qui est le minimum entre la deuxième distance (D2) et la distance de fin (ED) ;
i) augmentation de la valeur de la première distance (D1) par sommation de la variable distance entre lignes (DBL) et augmentation de la valeur de la deuxième distance par sommation de la variable distance entre lignes (DBL) ; et
j) répétition des étapes h) et i) jusqu'à ce que la première distance (D1) soit égale ou supérieure à la distance de fin (ED).

6. Dispositif d'éclairage automobile (1) comprenant
un agencement matriciel de sources de lumière à semi-conducteurs (2), destiné à fournir un motif lumineux ;
des moyens de commande (3) servant à accomplir les étapes du procédé selon l'une quelconque des revendications précédentes.

7. Dispositif d'éclairage automobile (1) selon la revendication 6, dans lequel l'agencement matriciel comprend au moins 5000 sources de lumière à semi-conducteurs (2).
